# FASCICULE DE BREVET EUROPEEN

(11) **EP 0 553 582 B1**
(45) Date de publication et mention de la délivrance du brevet: **13.12.1995**
(21) Numéro de dépôt: 92403470.5
(22) Date de dépôt: 21.12.1992
(51) Int. Cl.: H02K 21/38

(54) **Machine dynamo-électrique composée de secteurs juxtaposés suivant la direction du déplacement et procédé de fabrication desdits secteurs**
Dynamoelektrische Maschine mit in Bewegungsrichtung nebeneinanderliegenden Sektoren und Herstellungsverfahren für die Sektoren
Dynamoelectric machine comprising sectors juxtaposed in the direction of movement and method of making such sectors

(30) Priorité: 23.12.1991 FR 9115978
(43) Date de publication de la demande: 04.08.1993
(73) Titulaire: RADIO-ENERGIE S.A., 91300 Massy (FR)
(72) Inventeur: Koehler, Gérard, F-92410 Ville d'Avray (FR)
(74) Mandataire: Keib, Gérard

(56) Documents cités:
- WO-A-87/02525
- DE-A- 2 727 450
- US-A- 2 230 007
- US-A- 2 237 823
- PATENT ABSTRACTS OF JAPAN vol. 13, no. 246 (E-769)8 Juin 1989 JP-A-1047260

## Description

La présente invention concerne une machine dynamo-électrique à réluctance variable composée de structures monophasées comprenant chacune au moins un circuit magnétique primaire et un circuit magnétique secondaire, mobiles l'un par rapport à l'autre suivant une direction locale X de déplacement.

Dans la machine visée par l'invention, un circuit magnétique primaire est constitué par un assemblage de secteurs en forme d'arceaux primaires qui sont juxtaposés suivant la direction locale X de déplacement.

Des conducteurs actifs d'un bobinage de la phase considérée passent suivant la direction locale X dans une boucle magnétique élémentaire constituée par au moins un arceau primaire et par des éléments du circuit magnétique secondaire, situés tous sensiblement dans un même plan perpendiculaire à la direction locale X.

Les arceaux primaires ont chacun deux bras munis chacun d'au moins deux dents primaires ayant entre elles un pas Pd constant et l'interface entre les circuits magnétiques fixe et mobile est constituée par les dents primaires et par des dents secondaires à même pas dentaire Pd, se faisant respectivement face et définissant dans la direction locale X deux rangées d'entrefers situés de part et d'autre du bobinage de la phase considérée.

Des moyens de décalage de pas des dents sont tels que, pour deux arceaux primaires voisins, on ait simultanément la fermeture des entrefers d'un premier arceau primaire sur une première rangée d'entrefers et la fermeture des entrefers de l'autre arceau primaire sur la deuxième rangée d'entrefers tandis qu'on ait l'ouverture des autres entrefers.

Cette configuration se retrouve dans le DE-A-2 727 450 mais ce dernier présente des difficultés de fonctionnement et de fabrication.

Le PCT WO92/00628 déposé le 28-06-91 (publié le 09.01.92) revendiquant la priorité à FR-A-2.664.105 permet une réalisation simple d'arceaux de circuit magnétique, sans limitation de taille et jusqu'à des fréquences relativement élevées, ces arceaux provenant de préférence du sectionnement de tores enroulés et collés à partir d'une bande de tôle magnétique mince à grains orientés.

Cependant, l'aimant permanent rotorique pouvant être ajouté suivant ce PCT à son axe parallèle au champ du bobinage et constitue une simple aide à l'excitation, donnant aussi un couple de maintien sans excitation.

Le EP-B1-143.029 décrit un moteur à réluctance, dans lequel un aimant permanent est orienté de façon à ce que le champ du bobinage de la phase correspondante soit perpendiculaire à la direction d'aimantation de l'aimant permanent et dirigé vers l'une ou l'autre des extrémités de chacune de ses pièces polaires définissant des entrefers disposés en plusieurs rangées, en créant ainsi un dispositif d'aiguillage de flux vers certains entrefers actifs ayant les variations de réluctance recherchées. Dans la disposition principale de cet EP, des moyens de décalage de pas de dents pour rendre actifs ces entrefers consistent à avoir le même pas dentaire régulier sur quatre rangées d'entrefers, avec des décalages de pas entre ces rangées.

L'axe de l'aimant permanent est ici perpendiculaire à la fois à la direction locale du déplacement et aux conducteurs actifs, avec un bon couplage magnétique entre conducteurs et aimant permanent.

Toutefois, la réalisation de ce moteur pose des problèmes car on ne peut utiliser des tôles sans joint magnétique, le flux ayant de plus à passer d'une tôle à sa voisine. D'autre part, le fer fritté n'est utilisable que pour de petites dimensions et à des fréquences relativement basses.

Le but de la présente invention est d'adapter la machine visée par l'invention de façon à ce qu'elle bénéficie des avantages d'un dispositif d'aiguillage de flux semblable à celui décrit dans le EP cité, sans en avoir cependant les inconvénients tout en étant moins encombrant et sans compliquer la réalisation, avec indication d'un procédé de fabrication.

Suivant l'invention, chaque arceau primaire est constitué par des bandes de tôle magnétique minces cambrées autour du bobinage, assemblées sans joint magnétique par collage et limitées dans la direction locale X par des faces latérales sensiblement planes. Les deux rangées de dents primaires d'un même arceau ont entre elles un même calage et ont un décalage d'un demi pas dentaire Pd/2 par rapport aux dents de l'arceau primaire voisins. Enfin des aimants permanents sont disposés chacun entre les faces latérales en regard de deux arceaux primaires voisins, chaque aimant permanent ayant une direction d'aimantation sensiblement parallèle à la direction locale X et ayant des polarités telles que les deux faces latérales d'un même arceau primaire soient en contact avec des polarités de même nom.

Suivant une première variante de réalisation, la machine ne comporte par structure qu'un circuit magnétique primaire pourvu d'un bobinage et le circuit magnétique secondaire est mobile autour d'un axe de rotation Z et est constitué par un assemblage d'arceaux secondaires constitués chacun par des bandes de tôle magnétique minces cambrées autour du bobinage et assemblées par collage. Les deux rangées de dents secondaires ont entre elles un décalage d'un demi pas dentaire Pd/2 et les arceaux primaires sont disposés en couronne à cheval sur le bobinage qui est torique et centré sur l'axe de rotation Z.

Suivant une deuxième variante, la machine comporte par structure deux circuits magnétiques primaires superposés et se faisant face suivant une direction Y perpendiculaire à la direction locale X du déplacement. Deux aimants permanents du premier et du deuxième circuit magnétique ayant même calage ont des directions d'aimantation opposées et le circuit magnétique secondaire est alors constitué par deux paquets de tôles planes ayant chacun suivant la direction locale X deux lignes de dents opposées faisant face respectivement aux dents du premier et du deuxième circuit magnétique primaire.

Les deux lignes opposées de dents secondaires de chaque paquet de tôles ont même calage et les dents d'un paquet de tôles ont un décalage d'un demi pas dentaire avec les dents de l'autre paquet de tôle.

Si la direction de superposition Y est perpendiculaire à un axe de rotation Z, chaque paquet de tôles peut alors avoir une forme en couronne cylindrique mobile en rotation autour d'un axe de rotation Z et les arceaux primaires du circuit magnétique primaire extérieur et intérieur sont disposés respectivement en couronne à cheval chacun sur son bobinage qui est torique et centré sur l'axe Z de façon à constituer un générateur ou un moteur rotatif pas-à-pas hybride à faible inertie.

La direction locale X de déplacement peut aussi être en tout point parallèle à une direction de translation X′. Deux structures à chacune deux circuits magnétiques primaires sont alors alignées suivant la direction de translation X′, sont décalées entre elles d'un quart pas dentaire et ont des bobinages comportant des conducteurs de retour de façon à constituer un moteur linéaire pas-à-pas hybride.

L'invention concerne aussi les procédés d'obtention et d'usinage des arceaux par sectionnement de tores enroulés et collés à partir d'une bande de tôle magnétique mince.

D'autre particularités, avantages et procédés de fabrication de l'invention apparaîtront dans la description ci-après.

Aux dessins annexés, donnés à titre non limitatifs:
la figure 1 représente schématiquement un double redressement d'une portion d'arceaux primaires et secondaires d'une structure monophasée rotative;
la figure 2 représente une coupe partielle dans un plan perpendiculaire à l'axe de rotation de deux arceaux primaires et de deux arceaux secondaires rotatifs;
la figure 3 représente une demi-coupe d'un moteur rotatif à deux structures monophasées coupée dans différents plans axiaux;
la figure 4 est semblable à la figure 1, mais avec deux circuits magnétiques primaires par structure;
la figure 5 est semblable à la figure 3, mais avec cette dernière disposition;
la figure 6 représente la découpe d'un arc de tôle du rotor de la figure 5;
la figure 7 représente schématiquement une disposition à phases fractionnées;
la figure 8 est semblable à la figure 5, mais adaptée au cas d'un moteur-roue à phases angulairement réparties, et
la figure 9 est une vue en perspective d'un moteur linéaire.

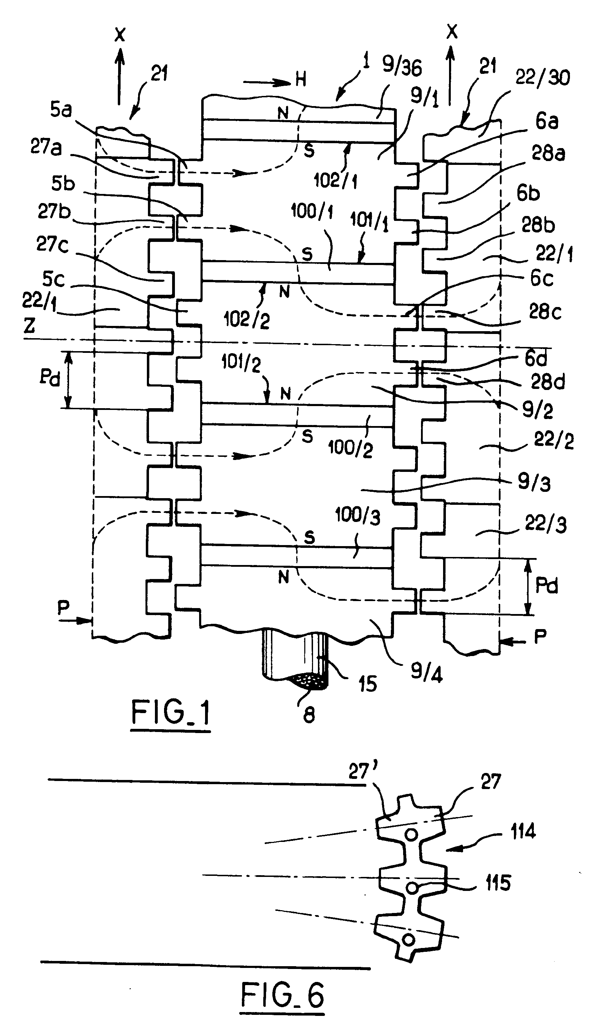

Sur la figure 1, le premier redressement supprime le calage angulaire des arceaux primaires 9 et secondaires 22 des circuits magnétiques primaire 1 et secondaire 21 par rapport à l'axe de rotation Z. Le deuxième redressement met à plat la courbure des arceaux autour du bobinage 15 et pour cela, les arceaux secondaires sont supposés coupés suivant leur plan de symétrie P.

Suivant cette disposition, on a représenté les arceaux primaires 9/1 à 9/4 ainsi qu'un dernier arceau 9/36 et les arceaux secondaires 22/1 à 22/3 ainsi qu'un dernier arceau 22/30.

Deux rangées d'entrefers de part et d'autre du bobinage 15 sont constituées par une rangée de dents primaires 5a,5b,5c.. faisant face à une rangée de dents secondaires 27a,27b,27c.. et par une rangée de dents primaires 6a,6b,6c.. faisant face à une rangée de dents secondaires 28a,28b,28c.. L'extrémité d'un arceau primaire a au moins deux dents telles que 5a,5b qui ont un pas Pd qui se retrouve sur les dents secondaires.

On peut considérer que le circuit magnétique primaire 1 et le bobinage 15 constituent un stator d'une phase tandis que le circuit magnétique secondaire 21 constitue une partie d'un rotor se déplaçant suivant une direction X localement parallèle à des conducteurs actifs 8 du bobinage 15.

Ces conducteurs 8 passent donc dans une boucle magnétique élémentaire constituée par des arceaux tels que 9/1 et 22/1 situés sensiblement dans un même plan perpendiculaire à la direction X et ayant une interface constituée par des dents 5 et 27 d'une part et 6 et 28 d'autre part.

Les arceaux primaires 9 sont juxtaposés suivant la direction X du déplacement redressé et sont limités dans cette direction par des faces latérales 101 et 102.

Des décalages de dents sont tels qu'on ait la fermeture des entrefers d'un premier arceau primaire 9/1 sur la première rangée d'entrefers 5-27 et la fermeture des entrefers d'un deuxième arceau primaire voisin 9/2 sur la deuxième rangée d'entrefers 6-28 tandis qu'on ait l'ouverture des autres entrefers.

Suivant l'invention, entre deux arceaux primaires 9 voisins on a intercalé un aimant permanent 100. Par exemple l'aimant permanent 100/1 est intercalé entre les arceaux 9/1 et 9/2. Les faces latérales voisines 101/1 de l'arceau 9/1 et 102/2 de l'arceau 9/2 sont sensiblement parallèles entre elles et perpendiculaires à la direction X du déplacement.

Un aimant permanent a un axe d'aimantation NS sensiblement parallèle à la direction locale X du déplacement et donc aussi parallèle aux conducteurs actifs voisins 8. Le champ magnétique des conducteurs 8 est perpendiculaire à cet axe d'aimantation NS et dirigé vers l'une ou l'autre des extrémités des arceaux primaires où sont respectivement situées les dents 5 et 6. On a ainsi réalisé un dispositif d'aiguillage de flux avec un bon couplage magnétique comme décrit dans le EP cité. Mais dans ce dernier, l'axe d'aimantation était perpendiculaire et non parallèle à la direction locale du déplacement, ce qui nécéssitait 4 rangées d'entrefers par phase.

Deux faces latérales 101 et 102 d'un même arceau primaire 9 sont en contact avec des polarités de même nom des aimants permanents 100 contigus, ici S pour l'arceau 9/1 et N pour l'arceau 9/2. Cela implique d'avoir un nombre d'arceau primaires 9 pair.

Pour avoir les variations recherchées de réluctances d'entrefers, deux rangées de dents primaires 5,6 d'un même arceau primaire 9/1 ont entre elles un même calage et ont un décalage d'un demi pas dentaire Pd/2 par rapport aux dents de l'arceau primaire voisin 9/2, tandis que les deux rangées de dents secondaires 27 et 28 ont entre elles un décalage d'un demi pas dentaire Pd/2.

En supposant que le champ créé par les conducteurs 8 ait la direction H (vers la droite) on voit qu'une ligne de flux telle que celle représentée en pointillé venant de la gauche de l'entrefer fermé 27b-5b est happée par la face S de l'aimant permanent 100/1 et passe en diagonale vers la droite, de l'arceau 9/1 à l'arceau 9/2 où elle trouve l'entrefer fermé 6c-28c. Le trajet du flux revient ensuite à son point de départ par le rotor. D'autres lignes de flux sont aussi représentées. Le flux entrant dans un arceau primaire sort par moitié sur les arceaux l'encadrant.

Dans le cas où le circuit magnétique secondaire 21 est constitué par des secteurs tels que des arceaux secondaires 22/1, 22/2.. le trajet de certaines lignes de flux peut avoir à passer par un joint entre deux arceaux, qui doit donc avoir une faible réluctance.

Si le champ H a une direction inverse, on voit que le flux passera dans les arceaux primaires suivant l'autre ligne diagonale, ayant tendance à fermer des entrefers ouverts.

Le même résultat serait obtenu avec un décalage d'un demi pas dentaire Pd/2 entre les groupes de dents primaires 5 et 6 de chacune des rangées d'entrefers d'un même arceau primaire et avec un calage angulaire identique des dents secondaires 27 et 28, ou en répartissant des décalages entre le primaire et le secondaire. La solution retenue donne cependant plus de place pour loger l'aimant permanent 100.

Avec un nombre Ndp de dents primaires par arceau et par rangée égal à deux on voit que le nombre total de dents secondaires par rangée doit être égal au nombre d'arceaux primaires multiplié par (2+1/2) Ici, on a 36 arceaux primaires de 2 dents et 30 arceaux secondaires de 3 dents.

Pour augmenter le nombre d'entrefers en action à nombre de dents secondaires constant, on a avantage à avoir un nombre Ndp élevé. Ici, pour une alternance de champ H, on a 2x36 entrefers actifs par rangée sur 90 dents secondaires, soit un coefficient d'utilisation de 4/5 par rapport à un moteur sans aimant suivant le PCT cité. On aurait un coefficient de 6/7 avec Ndp= 3, en diminuant aussi le nombre d'aimants permanents.

On ne peut cependant pas augmenter trop ce nombre Ndp car il faut que la surface polaire de l'aimant permanent 100 (donc la surface des faces 101 et 102) soit en rapport avec les surfaces d'entrefers, donc avec Ndp, en fonction de l'induction rémanente du type d'aimant permanent choisi.

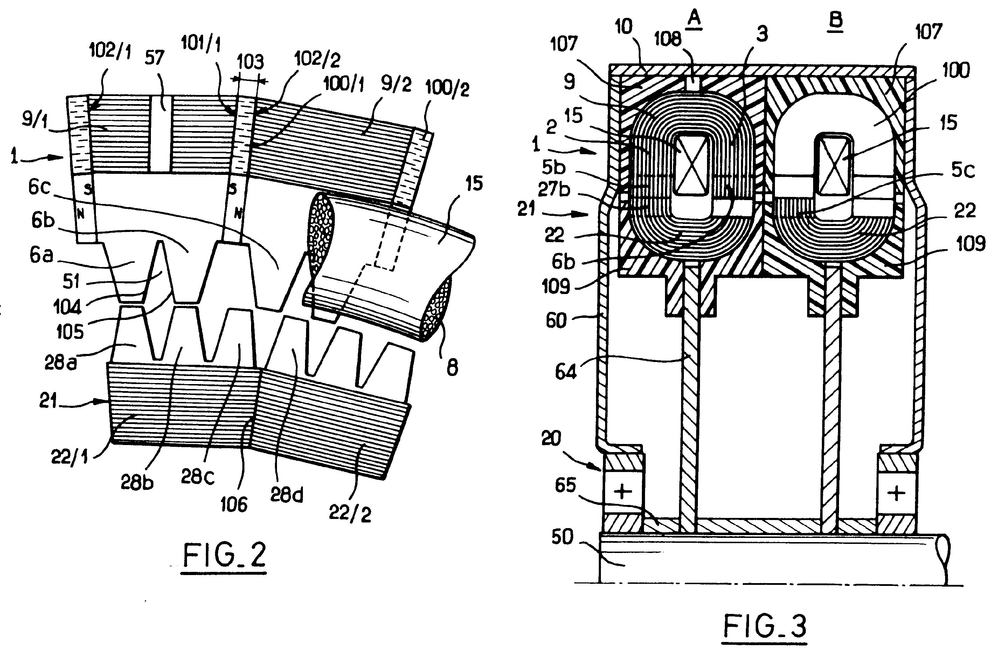

La figure 2 représente une coupe perpendiculaire à l'axe de rotation Z de deux arceaux primaires 9/1,9/2 et de deux arceaux secondaires 22/1,22/2 avec les caractéristiques de dentures de la figure 1. On a représenté aussi une fraction de bobinage 15 de forme torique avec ses conducteurs 8. Les arceaux 9 sont disposés à cheval sur le bobinage 15.

Pour de petits moteurs à gamme de vitesse réduite, on peut avoir des arceaux en fer fritté comme décrit dans le FR cité. Mais ici, suivant l'invention, comme on le voit sur les coupes des arceaux des figures 2 et 3, ces derniers sont constitués chacun par des bandes de tôle magnétique minces cambrées autour du bobinage 15 et assemblées sans joint magnétique par collage. De préférence, ces arceaux proviennent du sectionnement de tores bobinés et collés à partir de bande de tôle magnétique mince à grains orientés comme décrit dans le FR et le PCT cités. La tranche de chaque tôle est en contact direct avec l'aimant permanent.

Un creux de denture 51 entre deux dents primaires 6 est constitué par deux faces planes 104,105 se rejoignant au fond de ce creux de denture. Ces faces peuvent être obtenues par deux saignées se rejoignant, faites par exemple avec un disque diamanté. Les dents 5 sont obtenues par les mêmes saignées.

On voit qu'un aimant tel que 100/1 d'épaisseur 103 peut être logé entre les dents 6b et 6c compte tenu du décalage entre ces dents.

Les creux de denture secondaires 27,28 peuvent être obtenus de la même manière, mais avec des saignées différentes pour chaque rangée du fait des décalages de pas. Les faces 106 entre arceaux secondaires 22 sont usinées pour diminuer la réluctance de joint entre deux arceaux voisins.

De préférence un arceau secondaire 22 comporte une dent de plus qu'un arceau primaire 9. La largeur des arceaux primaires 9 et secondaires 22 peut alors être la même avant usinage des faces latérales ce qui fait qu'un arceau primaire et un arceau secondaire peuvent provenir du sectionnement d'un même tore. La sortie des fils de bobinage 15 peut se faire par un trou 57 percé dans un des arceaux primaires 9.

Sur la figure 3, l'arceau primaire 9 de la structure monophasée A comporte deux bras 2,3 de part et d'autre du bobinage 15. Cette structure A est coupée au niveau des dents 5b,6b. L'arceau secondaire 22 comporte une dent 27b donnant un entrefer fermé 5b-27b. On voit que sur l'autre rangée d'entrefer, la dent 6b n'est pas en face d'une dent secondaire 28 du fait du décalage de cette rangée.

La structure B coaxiale à la structure A est coupée au niveau d'un aimant permanent 100. Ce dernier entoure le bobinage 15 sur 3 faces, ce qui permet d'augmenter la surface de l'aimant permanent en contact avec le fer des arceaux et donne un bon couplage magnétique entre le bobinage et l'aimant permanent. Pour avoir des formes plus simples d'aimants permanents, telles que des polyèdres convexes, un aimant permanent 100 peut être décomposé en 3 parties.

L'épaisseur 103 de l'aimant permanent est dimentionnée pour approcher une induction à saturation dans les extrémités des dents actives en présence de l'excitation et cette dernière est juste suffisante pour qu'il ne passe pas de flux dans les entrefers qui s'ouvrent.

Les arceaux primaires 9 et les aimants permanents 100 d'une structure sont maintenus par un surmoulage 107. Pendant ce surmoulage, les arceaux primaires 9 sont maintenus appliqués sur des butées centrales par des pistons compensant les tolérances des arceaux et laissant une empreinte 108.

Ce surmoulage peut être fait en métal léger par fraction de circonférence pour pouvoir incorporer le bobinage 15 au montage. Il peut aussi être fait en une seule pièce en matière plastique chargée en incorporant le bobinage 15.

L'aimantation à saturation des aimants permanents 100 peut être obtenue à ce stade, en présence du fer, par application sur les surfaces d'entrefer des dents primaires d'impulsions magnétiques de polarités qui sont opposées d'un arceau à son voisin. On évite ainsi d'attirer des particules de fer pendant l'assemblage du circuit magnétique primaire 1 et on augmente l'induction rémanente.

Le stator du moteur est complété par exemple par une culasse 10 et des flasques 60 portant des moyens de rotation 20 pour un arbre 50.

Les arceaux secondaires 22 de la structure sont maintenus par un autre surmoulage 109 emprisonnant un moyeu 64 emmanché dans des cannelures 65 de l'arbre 50, constituant le rotor.

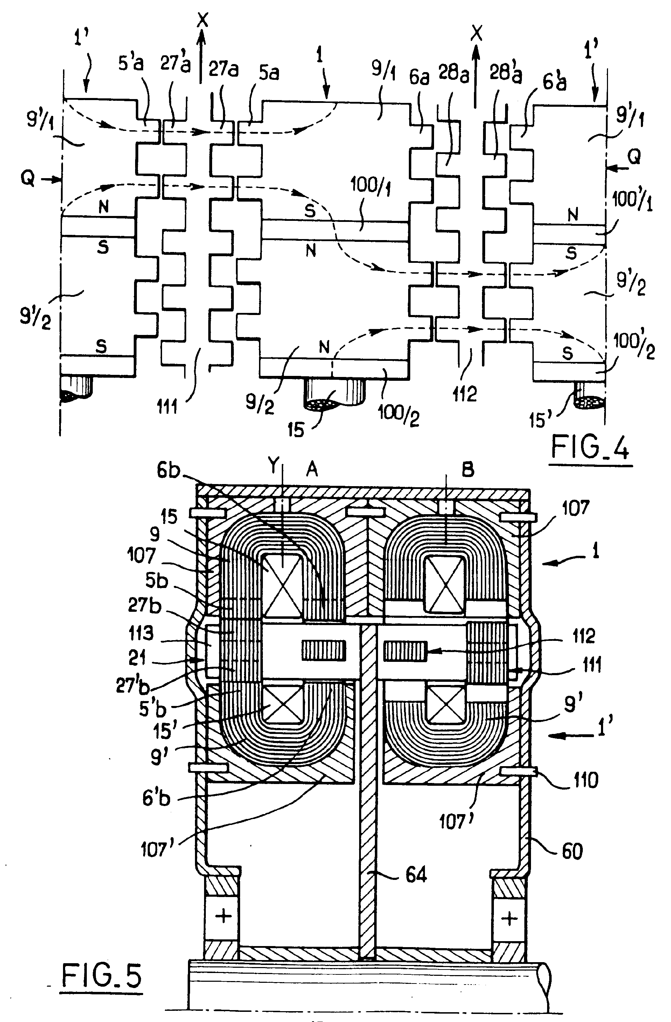

Des goupilles cannelées 110 (voir figure 5) emmanchées dans des trous permettent d'assembler entre eux des surmoulages voisins de structures juxtaposées et de caler les surmoulages 107 sur des flaques 60. Dans le cas où le surmoulage primaire est fait en plusieurs parties, l'assemblage de ces parties à une structure voisine décalée permet d'avoir encore un ensemble monobloc de circuits magnétiques primaires de plusieurs structures.

Le moteur ainsi constitué peut être excité par un courant diphasé à fréquence variable sous le pilotage de moyens de commutation comprenant un détecteur de position de façon à ne pas perdre de pas polaire pendant une rotation continue.

Si l'on impose un mouvement de rotation au rotor, la machine se comporte en générateur du type alternateur et permet un freinage à récupération d'énergie.

Suivant un deuxième mode de réalisation, sur la figure 4, on retrouve au centre un circuit magnétique primaire 1 identique à celui de la figure 1, encadré par deux rangées de dents secondaires 27 et 28 ayant entre elles un décalage d'un demi pas dentaire.

Cependant ici ces rangées ne sont pas réunies entre elles suivant un plan P mais chaque rangée fait partie d'un paquet de tôles 111,112 ayant deux lignes de dents opposées telles que 27′ opposée à 27 et 28′ opposée à 28. Ces lignes de dents 27′, 28′ forment des entrefers avec des dents 5′,6′ d'un deuxième circuit magnétique primaire 1′ coupé ici suivant le plan de symétrie Q et ayant un bobinage 15′. Les arceaux 9/1 et 9′/1 ont un même calage.

Les dents opposées 27 et 27′ ou 28 et 28′ d'un même paquet de tôles 111 ou 112 ont un même calage. Par contre, il y a un décalage d'un demi pas entre ces deux paquets 111,112 constituant le nouveau circuit magnétique secondaire 21.

Les aimants permanents 100/1 et 100′/1 appartenant à des circuits magnétiques différents et ayant même calage angulaire ont des directions d'aimantation opposées.

Ces dispositions conduisent à avoir une ligne de flux passant par 4 entrefers en série sous l'influence de deux dispositifs d'aiguillage de flux. Cette ligne de flux n'a plus à effectuer dans les paquets de tôles 111 et 112 un trajet dans la direction X du déplacement.

La figure 5 correspond à un déplacement par rotation suivant la figure 4. Les deux circuits magnétiques 1 et 1′ sont superposés et se font face suivant une direction de superposition Y perpendiculaire à la direction locale X et à l'axe de rotation Z. Le plan de coupe montre pour la structure A les entrefers de droite fermés (5b-27b, 27′b-5′b) et les entrefers de gauche ouverts par absence de dents secondaires. Pour la structure B décalée d'un quart de pas dentaire, les entrefers de droite sont ouverts par absence de dents primaires et secondaires et les entrefers de gauche sont ouverts par absence de dents primaires.

Chaque deuxième circuit magnétique 1′ des structures A et B est assemblé par un surmoulage 107′ et fixés sur les flasques 60 de la même manière, mais laissent passer entre eux un moyeu 64 qui porte un surmoulage 113 incorporant les paquets de tôles 111 et 112. Ces paquets peuvent être réalisés d'une manière classique par des tôles planes découpées et empilées suivant l'axe de rotation Z.

Le volume central du moteur est ainsi mieux occupé en augmentant la puissance et en diminuant l'inertie.

Un paquet de tôles 111,112 peut aussi être constitué par un assemblage imbriqué de tôles en arc comprenant chacune quelques paires de dents opposées 27,27′.

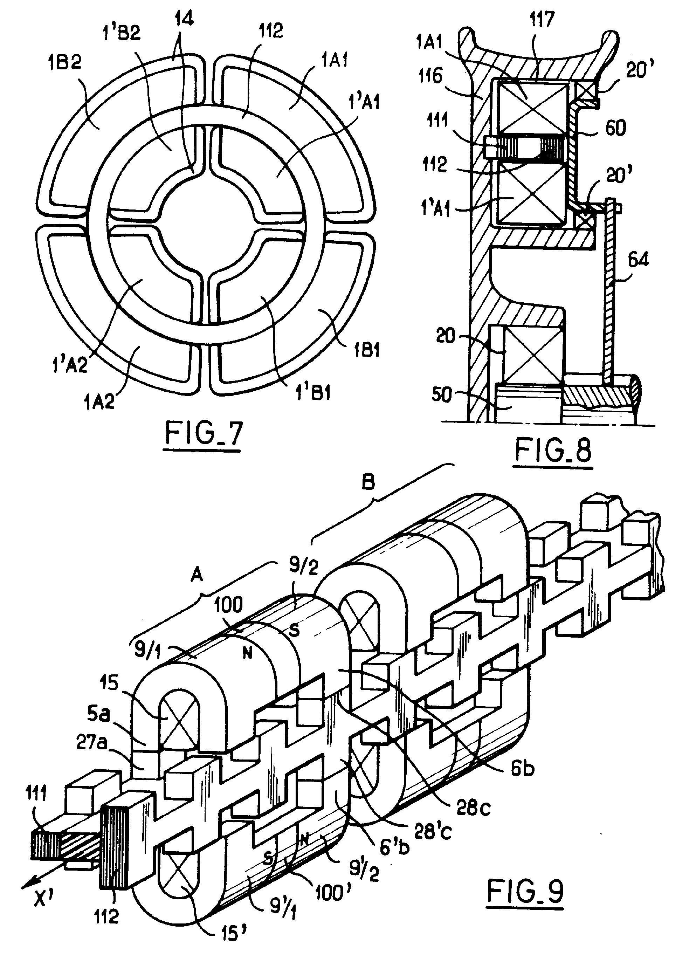

La figure 6 représente une tôle en arc 114 découpée dans une bande de tôle magnétique mince à grains orientés de façon à ce qu'une paire de dents opposées 27,27′ ait un axe sensiblement parallèle à l'axe de la bande de tôle. Des trous 115 convenablement positionnés permettent, sans perte de section de fer, d'assembler par des tiges des tôles ayant par retournement un décalage d'un demi pas dentaire.

La figure 7 représente schématiquement une disposition dans laquelle l'ensemble de deux paquets de tôles 111,112 en forme de couronnes cylindriques est commun aux structures monophasées d'une machine rotative à double circuit magnétique primaire. Les circuits magnétiques primaires extérieurs 1A,1B et intérieurs 1′A,1′B des phases sont fractionnés en secteurs de phase extérieurs 1A1,1A2,1B1,1B2 et intérieurs 1′A1,1′A2,1′B1,1′B2, chacun ayant un bobinage 15,15′ muni de conducteurs de retour 14 du fait que ces bobinages ne sont plus toriques. Ces secteurs de phase sont disposés le long des faces des couronnes suivant une séquence à phases alternée 1A1,1B1,1A2,1B2 à l'extérieur et 1′A1,1′B1,1′A2,1′B2 à l'intérieur. De la sorte, les couples moteurs sont équilibrés autour de l'axe Z. Si cette disposition avait été utilisée sur une machine tournante à un seul circuit magnétique primaire par phase, les éfforts radiaux localisés auraient entrainé des déformations par ovalisation, source de bruits. Avec des éfforts radiaux directement opposés sur une paire d'arceaux extérieur et intérieur, il n'y a plus de source de déformation.

La machine n'est plus composée que d'une seule galette et a donc un encombrement axial réduit.

La figure 8 représente une jante pleine 116 équipée d'un moteur-roue avec la disposition précédente. Les paquets de tôles 111 et 112 sont fixés directement dans une cavité 117 de la face interne de la jante 116. Les secteurs de phase 1A1..1′B2 (non détaillés) sont fixés suivant leurs séquences sur un flasque 60 relié à la cavité 117 par des moyens de rotation auxiliaires 20′ qui ne prennent en charge que le maintien précis des distances d'entrefers, les moyens de rotation principaux 20 étant prévus pour encaisser les perturbations du roulement avec des jeux plus grands. La cavité fermée 117 protège ainsi les parties délicates du moteur et la réaction de l'effort est transmis à l'arbre fixe 50 par un moyeu 64.

La figure 9 correspond au schéma de la figure 4. La direction locale X de déplacement a en tout point une direction de translation X′ suivant laquelle sont alignées deux structures A,B ayant entre elles un décalage d'un quart de pas dentaire. Chaque bobinage 15,15′ comporte des conducteurs de retour (non représentés). Le circuit magnétique secondaire 21 est constitué par deux paquets de tôles 111,112 rectilignes communs aux deux structures et étendus dans la direction X′ au-delà de ces structures.

Des moyens de roulement ou de glissement (non représentés) guident les paquets de tôle en respectant des distances d'entrefers. Les frottements sont réduits du fait que les forces d'attraction des arceaux 9 et 9′ sont directement opposés.

Le moteur linéaire pas-à-pas hybride ainsi constitué peut provoquer le déplacement soit des paquets de tôles, soit des circuits magnétiques primaires munis de fils souples d'alimentation.

L'invention concerne aussi le procédé d'obtention des arceaux par sectionnement de tores enroulés et collés en tôle magnétique mince à grains orientés et le procédé d'usinage des demi-tores ainsi obtenus.

Ces derniers sont chargés successivement dans une machine-transfert rotative à plateau tournant indexable qui compred les postes suivants:

-Chargement -Usinage d'une première face latérale 101 et d'une deuxième face latérale 102 -Usinage par saignée d'une première face 104 et d'une deuxième face 105 d'un creux de denture -Rectification de la surface d'entrefer d'une dent -Déchargement.

Pour des arceaux secondaires ayant un décalage entre rangées d'entrefer, les usinages des faces 104 et 105 des rangées doivent évidemment être faits en deux temps. Le chargement doit se faire sur un diamètre en rapport avec le diamètre d'entrefer de la machine.

Sans sortir de l'invention, des modifications peuvent être apportées à la description ci dessus. Par exemple, pour des machines tournantes, le circuit magnétique secondaire 21 peut être extérieur au circuit magnétique primaire 1. Les phases peuvent aussi être concentriques dans un même plan.

Les rangées d'entrefers peuvent avoir des diamètres différents ou être coniques ou dans un même plan perpendiculaire à l'axe de rotation, avec une direction de superposition Y parallèle à l'axe de rotation. Dans le cas d'un moteur linéaire, les surfaces d'entrefers peuvent aussi être cylindriques.

## Revendications

1. Machine dynamo-électrique à réluctance variable composée de structures (A,B..) monophasées, chaque structure comprenant au moins un circuit magnétique primaire (1,1′) et un circuit magnétique secondaire (21) mobiles l'un par rapport à l'autre suivant une direction locale (X) de déplacement, un circuit magnétique primaire étant constitué par un assemblage de secteurs en forme d'arceaux primaires (9,9′) juxtaposés suivant la direction locale (X) de déplacement, des conducteurs actifs (8) d'un bobinage (15,15′) de la phase considérée (A,B) passant suivant la direction locale (X) dans une boucle magnétique élémentaire constituée par au moins un arceau primaire (9,9′) et par des éléments du circuit magnétique secondaire (21) situés tous sensiblement dans un même plan perpendiculaire à la direction locale (X), les arceaux primaires ayant chacun deux bras (2,3;2′,3′) munis chacun d'au moins deux dents primaires (5,6;5′,6′) ayant entre elles un pas (Pd) constant, l'interface entre les circuits magnétiques fixe et mobile étant constituée par les dents primaires et par des dents secondaires (27,28;27′,28′) à même pas dentaire (Pd), se faisant respectivement face et définissant dans la direction locale (X) deux rangées d'entrefers (5-27,6-28; 5′-27′,6′-28′) situées de part et d'autre du bobinage (15;15′) de la phase considérée, des moyens de décalage de pas des dents étant tels que, pour deux arceaux primaires voisins, on ait simultanément la fermeture des entrefers d'un premier arceau primaire sur une première rangée d'entrefers et la fermeture des entrefers de l'autre arceau primaire sur la deuxième rangée d'entrefers tandis qu'on ait l'ouverture des autres entrefers, **caractérisée** en ce que chaque arceau primaire (9,9′) est constitué par des bandes de tôle magnétique minces cambrées autour du bobinage (15,15′), assemblées sans joint magnétique par collage et limitées dans la direction locale (X) par des faces latérales sensiblement planes (101,102), en ce que les deux rangées de dents primaires (5,6) d'un même arceau primaire (9/1) ont entre elles un même calage et on un décalage d'un demi pas dentaire (Pd/2) par rapport aux dents de l'arceau primaire voisin (9/2) et en ce que des aimants permanents (100) sont disposés chacun entre les faces latérales (101,102) en regard de deux arceaux primaires voisins (9/1,9/2;9′/1,9′/2), chaque aimant permanent ayant une direction d'aimantation (NS) sensiblement parallèle à la direction locale (X) et ayant des polarités (N,S) telles que les deux faces latérales d'un même arceau primaire soient en contact avec des polarités (N;S) de même nom.

2. Machine selon la revendication 1, ne comportant par structure (A,B) qu'un circuit magnétique primaire (1) pourvu d'un bobinage (15), caractérisée en ce que le circuit magnétique secondaire (21) est mobile autour d'un axe de rotation (Z) et est constitué par un assemblage d'arceaux secondaires (22) constitués chacun par des bandes de tôle magnétique minces cambrées autour du bobinage (15) et assemblées par collage, en ce que les deux rangées de dents secondaires (27,28) ont entre elles un décalage d'un demi pas dentaire (Pd/2) et en ce que les arceaux primaires (9) sont disposés en couronne à cheval sur le bobinage (15) qui est torique et centré sur l'axe de rotation (Z) de façon à constituer un générateur ou un moteur rotatif pas-à-pas hybride.

3. Machine selon la revendication 1, comportant par structure deux circuits magnétiques primaires (1,1′) superposés et se faisant face suivant une direction de superposition (Y) perpendiculaire à la direction locale (X) du déplacement, caractérisée en ce que deux aimants permanents (100/1,100′/1) du premier (1) et du deuxième (1′) circuit magnétique primaire ayant même calage ont des directions d'aimantation (NS) opposées, en ce que le circuit magnétique secondaire (21) est constitué par deux paquets de tôles planes (111,112) ayant chacun suivant la direction locale (X) deux lignes de dents opposées (27,27′;28,28′), les dents (27,28) de la première ligne de chaque paquet de tôles faisant face aux dents (5,6) du premier circuit magnétique primaire (1) et les dents (27′,28′) de la deuxième ligne de chaque paquet de tôle faisant face à des dents (5′,6′) du deuxième circuit magnétique primaire (1′), en ce que les deux lignes opposées de dents secondaires (27,27′;28,28′) de chaque paquet de tôles (111,112) ont même calage et en ce que les dents (27,27′) d'un paquet de tôles (111) ont un décalage d'un demi pas dentaire (Pd/2) avec les dents (28,28′) de l'autre paquet de tôles (112).

4. Machine selon la revendication 3, dans laquelle la direction de superposition (Y) est perpendiculaire à un axe de rotation (Z), caractérisée en ce que chaque paquet de tôles (111,112) a une forme en couronne cylindrique mobile en rotation autour de l'axe de rotation (Z) et en ce que les arceaux primaires (9,9′) du circuit magnétique primaire extérieur (1) et intérieur (1′) sont disposés respectivement en couronne à cheval chacun sur son bobinage (15,15′) qui est torique et centré sur l'axe de rotation (Z) de façon à constituer un générateur ou un moteur rotatif pas-à-pas hybride à faible inertie.

5. Machine selon la revendication 4, caractérisée en ce que chaque paquet de tôles (111,112) est constitué par un assemblage imbriqué d'arcs (114) découpés dans une bande de tôle magnétique mince de façon à ce qu'une paire de dents opposées (27,27′;28,28′) d'un arc ait un axe sensiblement parallèle à l'axe de la bande de tôle.

6. Machine selon l'une quelconque des revendications précédentes, caractérisée en ce qu'elle comporte deux structures (A,B) juxtaposées suivant l'axe de rotation (Z) et décalées d'un quart de pas polaire, ayant des bobinages (15;15,15′) toriques alimentées par des courants diphasés sous le pilotage de moyens de commutation.

7. Machine selon la revendication 4, caractérisée en ce que l'ensemble des deux paquets de tôles (111,112) en forme de couronne cylindrique d'un circuit magnétique secondaire (21) est commun aux structures monophasées (A,B) dont les circuits magnétiques primaires extérieurs (1A,1B) et intérieurs (1′A,1′B) sont fractionnés en secteurs de phase extérieurs (1A1,1A2,1B1,1B2) et intérieurs (1′A1,1′A2,1′B1,1′B2), chacun ayant un bobinage (15,15′) comportant des conducteurs de retour (14,14′) et en ce que les secteurs de phase extérieurs et intérieurs sont disposés le long des couronnes suivant une séquence à phases alternées (1A1,1B1,1A2,1B2; 1′A1,1′B1,1′A2,1′B2).

8. Machine selon la revendication 7, caractérisée en ce que les paquets de tôles (111,112) du circuit magnétique secondaire (21) sont fixés dans une cavité (117) de la face intérieure d'une jante (116) mobile en rotation et en ce que les secteurs de phase (1A1..1′B2) sont fixés suivant leurs séquences sur un flasque (60) relié à la cavité (117) par des moyens de rotation auxiliaires (20′) qui ne prennent en charge que le maintien précis des distances d'entrefers.

9. Machine selon la revendication 3, caractérisée en ce qu'en tout point, la direction locale (X) de déplacement est parallèle à une direction de translation (X′), en ce que deux structures (A,B) sont alignées suivant la direction de translation (X′), ont entre elles un décalage d'un quart de pas dentaire et ont chacune deux bobinages (15,15′) comportant des conducteurs de retour et en ce qu'un circuit magnétique secondaire (21) est commun aux deux structures (A,B) et est étendu dans la direction de translation (X′) au-delà de ces structures de façon à constituer un moteur linéaire pas-à-pas hybride.

10. Machine selon l'une quelconque des revendications 1 à 8, caractérisée en ce qu'un surmoulage (107,107′) maintient en place des arceaux primaires (9,9′) et des aimants permanents (100,100′) d'un circuit magnétique primaire (1,1′) d'une structure (A,B).

11. Machine selon la revendication 10, caractérisée en ce qu'un circuit magnétique primaire (1,1′) est assemblé par le surmoulage (107,107′) qui est en une seule pièce en matière plastique et incorpore également le bobinage (15,15′)

12. Procédé pour réaliser un circuit magnétique primaire (1,1′) pour une machine selon la revendication 10 ou 11, caractérisé en ce que l'aimantation à saturation des aimants permanents (100,100′) est effectuée après le surmoulage (107,107′) par application sur les surfaces d'entrefers des dents primaires (5,6;5′,6′) d'impulsions magnétiques de polarités qui sont opposées d'un arceau à son voisin.

13. Procédé pour réaliser des arceaux (9,9′,22) de circuit magnétique, notamment pour une machine selon l'une quelconque des revendications précédentes, caractérisé en ce que ces arceaux sont obtenus par sectionnement de tores enroulés et collés à partir d'une bande de tôle magnétique mince.

14. Procédé selon la revendication 13, caractérisé en ce que des demi-tores sont chargés successivement dans une machine-transfert où ils y subissent des usinages de faces latérales (101,102), de creux de denture (51) et de surfaces d'entrefers.

## Patentansprüche

1. Dynomoelektrische Maschine mit veränderlicher Reluktanz, bestehend aus Einphasenstrukturen (A, B ...), wobei jede Struktur mindestens einen Primärmagnetkreis (1, 1′) und einen Sekundärmagnetkreis (21) aufweist, die gemäß einer örtlichen Bewegungsrichtung (X) relativ zueinander beweglich sind, wobei ein Primärmagnetkreis aus einer Netzverbindung in Gestalt von Primärbogen (9, 9′) besteht, die gemäß der örtlichen Bewegungsrichtung (X) nebeneinander liegen, wobei aktive Leiter (8) einer Wicklung (15, 15′) der betrachteten Phase (A, B) gemäß der örtlichen Richtung (X) durch eine Elementarmagnetschleife laufen, die aus mindestens einem Primärbogen (9, 9′) und Elementen des Sekundärmagnetkreises (21) besteht, welche alle in einer im wesentlichen gleichen senkrechten Ebene zur örtlichen Richtung (x) liegen, wobei die Primärbogen jeweils zwei Arme (2,3; 2′,3′) haben, die jeweils mit mindestens zwei, durch eine unveränderliche Teilung (Pd) voneinander getrennten Primärzähnen (5,6; 5′,6′) versehen sind, wobei die Schnittstelle zwischen dem feststehenden und dem beweglichen Magnetkreis durch die Primärzähne und durch Sekundärzähne (27, 28; 27′, 28′) mit gleicher Zahnteilung (Pd) gebildet ist, die sich jeweils gegenüberstehen und in örtlicher Richtung (X) zwei beidseitig von der Wicklung (15; 15′) der betrachteten Phase angeordnete Luftspaltreihen (5-27, 6-28; 5′-27′, 6′-28′) definieren, wobei Mittel zur Versetzung der Zahnteilung so beschaffen sind, daß man für zwei benachbarte Primärbogen gleichzeitig das Schließen der Luftspalte eines ersten Primärbogens auf einer ersten Luftspaltreihe und das Schließen der Luftspalte des anderen Primärbogens auf der zweiten Luftspaltreihe erhält, während die anderen Luftspalte offen sind, dadurch gekennzeichnet, daß jeder Primärbogen (9, 9′) aus dünnen Magnetblechbändern besteht, die um die Wicklung (15, 15′) gebogen, ohne Magnetdichtung durch Kleben verbunden und in örtlicher Richtung (X) durch zwei im wesentlichen ebene Seitenwände (101, 102) begrenzt sind, daß die beiden Primärzahnreihen (5, 6) eines gleichen Primärbogens (9/1) gleich zueinander eingestellt sind und in Bezug auf die Zähne des benachbarten Primärbogens (9/2) um eine halbe Zahnteilung (Pd/2) versetzt sind und daß Permanentmagnete (100) jeweils zwischen den Seitenwänden (101, 102), zwei benachbarten Primärbogen (9/1, 9/2; 9′/1, 9′/2) gegenüberliegend, angeordnet sind, wobei jeder Permanentmagnet eine zur örtlichen Richtung (X) im wesentlichen parallele Magnetisierungsrichtung hat und solche Polaritäten (N, S) aufweist, daß die beiden Seitenwände eines gleichen Primärbogens mit gleichnamigen Polaritäten (N; S) in Kontakt stehen.

2. Maschine nach Anspruch 1, die pro Struktur (A, B) nur einen mit einer Wicklung (15) versehenen Primärmagnetkreis (1) aufweist, dadurch gekennzeichnet, daß sich der Sekundärmagnetkreis (21) um eine Rotationsachse (Z) bewegt und aus einer Verbindung von Sekundärbogen (22) besteht, die jeweils aus dünnen, um die Wicklung (15) gebogenen und durch Kleben verbundenen Magnetblechbändern bestehen, daß die beiden Sekundärzahnreihen (27, 28) um eine halbe Zahnteilung (Pd/2) gegeneinander versetzt sind und daß die Primärbogen (9) kranzförmig oben auf der torischen und mittig auf der Rotationsachse (Z) angeordneten Wicklung (15) gelagert sind, so daß ein Generator oder ein Hybrid-Schrittumlaufmotor gebildet wird.

3. Maschine nach Anspruch 1, die pro Struktur zwei Primärmagnetkreise (1, 1′) aufweist, welche übereinander gelagert sind und sich gemäß einer zur örtlichen Bewegungsrichtung (X) senkrechten Überlagerungsrichtung (Y) gegenüberstehen, dadurch gekennzeichnet, daß zwei Permanentmagnete (100/1, 100′/1) des ersten (1) und des zweiten (1′) Primärmagnetkreises, die gleich eingestellt sind, entgegengesetzte Magnetisierungsrichtungen (NS) aufweisen, daß der Sekundärmagnetkreis (21) aus zwei flachen Blechpaketen (111, 112) mit jeweils zwei in örtlicher Richtung (X) entgegengesetzten Zahnreihen (27, 27′; 28, 28′) besteht, wobei die Zähne (27, 28) der ersten Reihe jedes Blechpaketes den Zähnen (5, 6) des ersten Primärmagnetkreises (1) gegenüberstehen und die Zähne (27′, 28′) der zweiten Reihe jedes Blechpaketes Zähnen (5′, 6′) des zweiten Primärmagnetkreises (1′) gegenüberstehen, daß die beiden entgegengesetzten Sekundärzahnreihen (27, 27′; 28, 28′) jedes Blechpaketes (111, 112) gleich eingestellt sind und daß die Zähne (27, 27′) eines Blechpaketes (111) in Bezug auf die Zähne (28, 28′) des anderen Blechpaketes (112) um eine halbe Zahnteilung (Pd/2) versetzt sind.

4. Maschine nach Anspruch 3, bei der die Überlagerungsrichtung (Y) senkrecht zu einer Rotationsachse (Z) verläuft, dadurch gekennzeichnet, daß jedes Blechpaket (111, 112) eine sich um die Rotationsachse (Z) drehend bewegende zylindrische Kranzform aufweist und daß die Primärbogen (9, 9′) des äußeren (1) und inneren (1′) Primärmagnetkreises jeweils kranzförmig oben auf ihrer jeweiligen torischen und mittig auf der Rotationsachse (Z) angeordneten Wicklung (15, 15′) gelagert sind, so daß ein Generator oder ein Hybrid-Umlaufschrittmotor mit schwacher Trägheit gebildet wird.

5. Maschine nach Anspruch 4, dadurch gekennzeichnet, daß jedes Blechpaket (111, 112) aus einer verschachtelten Verbindung von aus einem dünnen Magnetblechband ausgeschnittenen Bogen (114) besteht, so daß ein Paar entgegengesetzter Zähne (27, 27′; 28, 28′) eines Bogens eine zur Achse des Blechbandes im wesentlichen parallele Achse aufweist.

6. Maschine nach einem der vorhergehenden Ansprüche, dadurch gekennzeichnet, daß sie zwei entlang der Rotationsachse (Z) nebeneinanderliegende und um eine Viertelpolteilung verschobene Strukturen (A, B) mit torischen Wicklungen (15; 15, 15′) aufweist, die mit durch Schaltmittel gesteuerten Zweiphasenströmen gespeist werden.

7. Maschine nach Anspruch 4, dadurch gekennzeichnet, daß die beiden Blechpakete (111, 112) in Gestalt eines zylinderförmigen Kranzes eines Sekundärmagnetkreises (21) zusammen für Einphasenstrukturen (A, B) gelten, deren äußere (1A, 1B) und innere (1′A, 1′B) Primärmagnetkreise in äußere (1A1,1A2, 1B1, 1B2) und innere (1′A1, 1′A2, 1′B1, 1′B2) Phasenabschnitte gespalten sind, wobei jeder eine Wicklung (15, 15′) mit Rückleitern (14, 14′) aufweist und daß die äußeren und inneren Phasenabschnitte entlang der Kränze entprechend einer Wechselphasenfolge (1A1,1B1, 1A2, 1B2; 1′A1, 1′B1, 1′A2, 1′B2) angeordnet sind.

8. Maschine nach Anspruch 7, dadurch gekennzeichnet, daß die Blechpakete (111, 112) des Sekundärmagnetkreises (21) in einer Ausnehmung (117) auf der Innenseite eines drehbeweglichen Kranzes (116) festgelegt sind und daß die Phasenabschnitte (1A1 ..1′B2) entprechend ihrer Folgen auf einem mit der Ausnehmung (117) durch zusätzliche Rotationsmittel (20′) verbundenen Flansch (60) festgelegt sind, welche lediglich für die präzise Beibehaltung der Luftspaltabstände sorgen.

9. Maschine nach Anspruch 3, dadurch gekennzeichnet, daß die örtliche Bewegungsrichtung (X) in jedem Punkt parallel zu einer Verschiebungsrichtung (X′) verläuft, daß zwei Strukturen (A, B) entsprechend der Verschiebungsrichtung (X′) ausgerichtet sind, gegeneinander um eine Viertelzahnteilung versetzt sind und jeweils zwei Wicklungen (15, 15′) mit Rückleitern haben und daß ein Sekundärmagnetkreis (21) für die beiden Strukturen (A, B) gilt und sich in Verschiebungsrichtung (X′) über diese Strukturen hinaus erstreckt, so daß ein Hybrid-Schrittlinearmotor gebildet wird.

10. Maschine nach einem der Ansprüche 1 bis 8, dadurch gekennzeichnet, daß ein Überguß 107, 107′) Primärbogen (9, 9′) und Permanentmagnete (100, 100′) eines Primärmagnetkreises (1, 1′) einer Struktur (A, B) in Position hält.

11. Maschine nach Anspruch 10, dadurch gekennzeichnet, daß ein Primärmagnetkreis (1, 1′) durch den Überguß (107, 107′) zuammengehalten ist, der einstückig aus Kunststoff ausgebildet ist und auch die Wicklung (15, 15′) miteinschließt.

12. Verfahren zur Herstellung eines Primärmagnetkreises (1, 1′) für eine Maschine nach Anspruch 10 oder 11, dadurch gekennzeichnet, daß die Magnetisierung der Permanentmagnete (100, 100′) bis zur Sättigung nach dem Überguß (107, 107′) erfolgt, indem die Spaltraumflächen der Primärzähne (5, 6; 5′, 6′) magnetischen Impulsen mit seinem Nachbarn um einen Bogen entgegengesetzten Polaritäten ausgesetzt werden.

13. Verfahren zur Herstellung von Magnetkreisbogen (9, 9′, 22), insbesondere für eine Maschine nach einem der vorhergehenden Ansprüche, dadurch gekennzeichnet, daß diese Bogen durch Trennen von aufgerollten und geklebten Ringen aus einem dünnen Magnetblechband erhalten werden.

14. Verfahren nach Anspruch 13, dadurch gekennzeichnet, daß Halbringe nach und nach in eine Transfermaschine eingebracht werden, wo ihre Seitenwände (101, 102), Zahnlücken (51) und Spaltraumoberflächen bearbeitet werden.

## Claims

1. A variable reluctance dynamo-electric machine made up of single-phase structures (A, B), each structure comprising at least one primary magnetic circuit (1, 1′) and one secondary magnetic circuit (21) mobile with respect to one another along a local displacement direction (X), wherein a primary magnetic circuit consists of an assembly of arch-shaped primary sectors (9, 9′) juxtaposed along the local displacement direction (X), active conductors (8) of a winding (15, 15′) of the phase considered (A, B) passing along the local direction (X) into an elementary magnetic loop consisting of at least one primary arch (9, 9′) and elements of the secondary magnetic circuit (21) all located substantially on one same plane perpendicular to the local direction (X), the primary arches each having two arms (2, 3; 2′, 3′) each equipped with at least two primary teeth (5, 6; 5′, 6′) having a constant pitch (Pd) between them, the interface between the fixed and mobile magnetic circuits being provided by the primary teeth and by secondary teeth (27, 28; 27′, 28′) of equal tooth pitch (Pd) respectively facing each other and defining in the local direction (X) two rows of armatures (5-27, 6-28; 5′-27′, 6′-28′) located on both sides of the winding (15; 15′) of the phase considered, means for shifting the tooth pitches being such that, for two neighbouring primary arches, they bring about the simultaneous closing of the armatures of a first primary arch on a first row of armatures and the closing of the armatures of the other primary arch on the second row of armatures, while the other armatures are opened, characterised in that each primary arch (9, 9′) consists of strips of thin magnetic sheet bent about the winding (15, 15′), assembled without a magnetic joint by means of glueing, and limited in the local direction (X) by substantially flat side faces (101, 102), in that the two rows of primary teeth (5, 6) of one same primary arch (9/1) have one same pitch between them and are shifted half a tooth pitch (Pd/2) with respect to the teeth of the neighbouring primary arch (9/2), and in that permanent magnets (100) are each disposed between the side faces (101, 102) opposite to two neighbouring primary arches (9/1, 9/2; 9′/1, 9′/2), each permanent magnet having a magnetization direction (NS) substantially parallel to the local direction (X) and having polarities (N, S) such that the two side faces of one same primary arch are in contact with polarities (N, S) of the same name.

2. A machine according to claim 1, including in each structure (A, B) only one primary magnetic circuit (1) equipped with a winding (15), characterised in that the secondary magnetic circuit (21) is mobile about an axis of rotation (Z) and consists of an assembly of secondary arches (22) each consisting of strips of thin magnetic sheet bent about the winding (15) and assembled by means of glueing, in that the two rows of secondary teeth (27, 28) have a one-half tooth pitch (Pd/2) shift between them, and in that the primary arches (9) are arranged in an overlapping ring on the winding (15) which is toric and centred on the axis of rotation (Z) so as to make up a generator or a hybrid step revolving motor.

3. A machine according to claim 1, including in each structure two primary magnetic circuits (1, 1′) superposed and facing each other along a superposition direction (Y) perpendicular to the local displacement direction (X), characterised in that two permanent magnets (100/1, 100′/1) of the first (1) and second (1′) primary magnetic circuit having the same pitch have opposite magnetization directions (NS), in that the secondary magnetic circuit (21) consists of two packs of flat sheets (111, 112) each having along the local direction (X) two opposite lines of teeth (27, 27′; 28, 28′), wherein the teeth (27, 28) of the first line of each pack of sheets face the teeth (5, 6) of the first primary magnetic circuit (1) and the teeth (27′, 28′) of the second line of each pack of sheets face teeth (5′, 6′) of the second primary magnetic circuit (1′), in that the two opposite lines of secondary teeth (27, 27′; 28, 28′) of each of pack of sheets (111, 112) have the same pitch and in that the teeth (27, 27′) of one pack of sheets (111) are shifted half a tooth pitch (Pd/2) with respect to the teeth (28, 28′) of the other pack of sheets (112).

4. A machine according to claim 3, in which the superposition direction (Y) is perpendicular to an axis of rotation (Z), characterised in that each pack of sheets (111, 112) has the shape of cylindrical ring and is free to rotate about the axis of rotation (Z), and in that the primary arches (9, 9′) of the outer (1) and inner (1′) primary magnetic circuits are respectively arranged in an overlapping ring, each on its winding (15, 15′) which is toric and centred on the axis of rotation (Z) so as to make up a generator or a low inertia hybrid step revolving motor.

5. A machine according to claim 4, characterised in that each of pack of sheets (111, 112) consists of an imbricated assembly of arcs (114) cut from a strip of thin magnetic sheet in order for a pair of opposite teeth (27, 27′; 28, 28′) of an arc to have an axis substantially parallel to the axis of the sheet strip.

6. A machine according to any of the preceding claims, characterised in that it includes two structures (A, B) juxtaposed along the axis of rotation (Z) and shifted one-quarter pole pitch with respect to one another, having toric windings (15; 15, 15′) supplied by two-phase currents under the control of switching means.

7. A machine according to claim 4, characterised in that the set of two cylindrical ring-shaped packs of sheets (111, 112) of a secondary magnetic circuit (21) is common to the single-phase structures (A, B) whose outer (1A, 1B) and inner (1′A, 1′B) primary magnetic circuits are divided into outer (1A1, 1A2, 1B1, 1B2) and inner (1′A1, 1′A2, 1′B1, 1′B2) phase sectors, each having a winding (15, 15′) including return conductors (14, 14′), and in that the outer and inner phase sectors are disposed along the rings according to an alternating phase sequence (1A1, 1B1, 1A2, 1B2; 1′A1, 1′B1, 1′A2, 1′B2).

8. A machine according to claim 7, characterised in that the packs of sheets (111, 112) of the secondary magnetic circuit (21) are fixed inside a cavity (117) of the inner face of a rim (116) which is free to rotate, and in that the phase sectors (1A1 ... 1′B2) are fixed according to their sequences to a flange (60) connected to the cavity (117) by auxiliary rotation means (20′ ) whose sole purpose is to ensure that the armature distances are precisely kept.

9. A machine according to claim 3, characterised in that at any point, the local displacement direction (X) is parallel to a translation direction (X′), in that two structures (A, B) are aligned along the translation direction (X′), have a one-quarter tooth pitch shift between them, and each have two windings (15, 15′) including return conductors, and in that a secondary magnetic circuit (21) is common to the two structures (A, B) and extends in the translation direction (X′) beyond these structures so as to make up a hybrid step linear motor.

10. A machine according to any of claims 1 to 8, characterised in that a duplicate mould (107, 107′) keeps primary arches (9, 9′) and permanent magnets (100, 100′) of a primary magnetic circuit (1, 1′) of a structure (A, B) in position .

11. A machine according to claim 10, characterised in that a primary magnetic circuit (1, 1′) is assembled by means of the duplicate mould (107, 107′) which is integral, made of plastic material and also incorporates the winding (15, 15′).

12. A process to make a primary magnetic circuit (1, 1′) for a machine according to claim 10 or 11, characterised in that the saturated magnetization of the permanent magnets (100, 100′) is performed after the duplicate mould (107, 107′) by applying to the armature surfaces of the primary teeth (5, 6; 5′, 6′) magnetic pulses of polarities which are opposite from one arch to its neighbour.

13. A process to make arches (9, 9′, 22) of a magnetic circuit, particularly for a machine according to any of the preceding claims, characterised in that these arches are obtained by cutting wound and glued toroids from a thin magnetic sheet.

14. A process according to claim 13, characterised in that half-toroids are successively loaded into a transfer machine where they undergo the machining of the side faces (101, 102), tooth spaces (51) and armature surfaces.
